Europäisches Patentamt

European Patent Office

Office européen des brevets

(19)

(11) EP 1 120 644 A1

(12) EUROPEAN PATENT APPLICATION
published in accordance with Art. 158(3) EPC

(43) Date of publication:
01.08.2001 Bulletin 2001/31

(51) Int Cl.⁷: G01N 27/26

(21) Application number: 99943417.8

(86) International application number:
PCT/JP99/05110

(22) Date of filing: 20.09.1999

(87) International publication number:
WO 00/19188 (06.04.2000 Gazette 2000/14)

(84) Designated Contracting States:
AT BE CH CY DE DK ES FI FR GB GR IE IT LI LU MC NL PT SE

(30) Priority: 30.09.1998 JP 27919198

(71) Applicant: EBARA CORPORATION
Ohta-ku, Tokyo 144-8510 (JP)

(72) Inventors:
• MIYASAKA, Matsuho
  Fujisawa-shi, Kanagawa 251-8502 (JP)

• TAKAYAMA, Hirokazu
  Tokyo 144-8510 (JP)
• AMAYA, Kenji, 202 Mezon Kitto
  Kawasaki-shi, Kanagawa 211- 0001 (JP)
• AOKI, Shigeru
  Yokohama-shi, Kanagawa 241-0801 (JP)

(74) Representative: Wagner, Karl H., Dipl.-Ing.
  Wagner & Geyer,
  Patentanwälte,
  Gewürzmühlstrasse 5
  80538 München (DE)

(54) CORROSSION/ANTICORROSION ANALYSIS METHOD

(57) The present invention provides a method of analyzing corrosion and corrosion prevention in a system where two or more same or different regions of regions that are modeled as two-dimensional, three-dimensional, and axially symmetric regions are present continuously.

The entire system is divided into regions, and each of the regions is divided into elements depending on respective models thereof, with one of the regions used as an attentional region and another as a non-attentional region. A division plane is shared by the two regions, and current densities and potentials on the elements which are positionally the same as each other on the division plane are equivalent to each other. A discrete boundary integral equation corresponding to the non-attentional region is modified to express the unknown relationship between current densities and potentials on the division plane with the known relationship between current densities and potentials on elements in the non-attentional region other than the division plane. A boundary element analysis is performed on the attentional region using the determined relationship between the current densities and potentials on the division plane as a boundary condition thereby to determine potential and current density distributions in the attentional region in its entirety. Then, a boundary element analysis is performed on the non-attentional region again using the determined potentials or current densities on the division plane thereby to analyze the regions in a related manner.

FIG. 6A   FIG. 6B   FIG. 6C

EP 1 120 644 A1

## Description

## Technical Field

The present invention relates to an analyzing method, which uses a computer for predicting corrosion and corrosion prevention. More particularly, the present invention provides an analyzing method that is preferably applicable to the problem of macro-cell corrosion (cathodic protection) such as heterogeneity metal contacting corrosion such as galvanic corrosion and differential aeration corrosion among the problems of metal corrosion and corrosion prevention. The present invention is also applicable to a system in plating, battery cell, and electrolytic tank, where an anode and a cathode are macroscopically disposed with an electrolyte interposed therebetween to form a potential field, other than the problems of metal corrosion and corrosion prevention.

## Background Art

In a solution having a high electric conductivity such as seawater, an object tends to suffer damage due to macrocell corrosion such as galvanic corrosion caused when different metal materials are used or flow velocity corrosion caused by an irregular flow velocity distribution (differential aeration corrosion caused by a flow velocity difference). It has been desired to accurately predict those types of corrosion in advance and provide countermeasures against them. "Cathodic protection" based on the positive utilization of a corrosion inhibiting phenomenon on the cathode of a macrocell is widely used as a most basic corrosion prevention process. It is required for cathodic protection to predict a corrosion prevention range and the rate of consumption of a sacrificial anode depending on the material and location of the anode, the shape, material, and arrangement of a device to be protected against corrosion, and solution conditions (electric conductivity and flow velocity).

There are limitations on an experimental approach to the prediction of a macrocell because the shape of the field has a large effect on the behavior of the macrocell. Specifically, for example, even if an experiment is conducted on galvanic corrosion and the effects of various factors including an area ratio, a combination of materials, and the electric conductivity of a solution are studied in detail, the results are only applicable to the three-dimensional shape of a region that is occupied by the solution in the experiment. Since actual devices and structures are of complex shapes, it is not possible to accurately estimate a liquid junction resistance in a macrocell, and it is difficult to apply experimental results directly. Furthermore, each time the shape of a device to be protected against corrosion is changed, it is practically impossible to conduct an experiment by assuming the changed shape.

Therefore, it has been customary to predict macrocell corrosion and cathodic protection on a real structure according to empirical rules in most cases. Many attempts have been made to perform more accurate, quantitative predictions. According to one effort, potential and current density distributions are determined by purely mathematically solving a Laplace equation, which governs a potential distribution. However, objects to be analyzed are limited to relatively simple systems such as flat plates, cylinders, etc. While a conformal mapping process and a process using an electrically conductive paper have been employed for a long time as a process for analyzing an electric field problem, these processes can handle only a two-dimensional field.

With the development of the computer technology in recent years, attempts have widely been made to apply a numerical analysis based on a differential method, a finite element method, and a boundary element method. However, the differential method and the finite element method are disadvantageous in that they require a long computational time as the overall object has to be divided into elements. According to the boundary element method, on the other hand, the time required for dividing the object into elements and performing computations can greatly be shortened because only the surface of the object needs to be divided into elements. Considering that the boundary element method is an optimum process for analyzing a corrosion problem where physical quantities on the surface such as a potential and a current density are important, the inventor of the present invention has developed an analyzing technique, which has applied the boundary element method to the prediction of macrocell corrosion and cathodic protection problems.

[Fundamental equations and boundary conditions]

The corrosion of a metal in an aqueous solution progresses as an electrochemical reaction in the form of an anodic reaction and a cathodic reaction, which are paired with each other. For example, with respect to the corrosion of iron in a neutral aqueous solution of salt containing dissolved oxygen, such as seawater, the reactions progress as indicated by the equations (1) and (2):

$$Fe \rightarrow Fe_2 + 2e^- \text{ (anodic reaction)} \tag{1}$$

$$1/2 \cdot O_2 + H_2O + 2e^- \rightarrow 2OH^- \text{ (cathodic reaction)} \tag{2}$$

On a surface of metal, a region where an anodic reaction is taking place is referred to as an anode, and a region where a cathodic reaction is taking place is referred to as a cathode. Usually an anode and a cathode are minute and mixed with each other, and their positions are not constant. Therefore, corrosion progresses substantially uniformly as a whole while being subjected to some irregularities. However, if the material, the surface state, and the environment are not uniform, then the anode and the cathode are localized, and corrosion is concentrated on a certain location (anode region). The former is referred to as microcell corrosion (cell refers to a battery cell), and the latter is referred to as macrocell corrosion. Seawater pumps are often significantly damaged primarily by macrocell corrosion such as galvanic corrosion or differential aeration corrosion. The cathode in macrocell corrosion is inhibited from corrosion as only a cathode current flows through the cathode. A method of corrosion prevention which positively utilizes this corrosion inhibiting phenomenon is cathodic protection.

Either of systems of macrocell corrosion and cathodic protection can be considered as a cell in which an anode and a cathode are present with an electrolyte interposed therebetween. A potential ($\phi$) in the electrolyte is governed by the following Laplace equation (3):

$$\nabla^2 \Phi = 0 \tag{3}$$

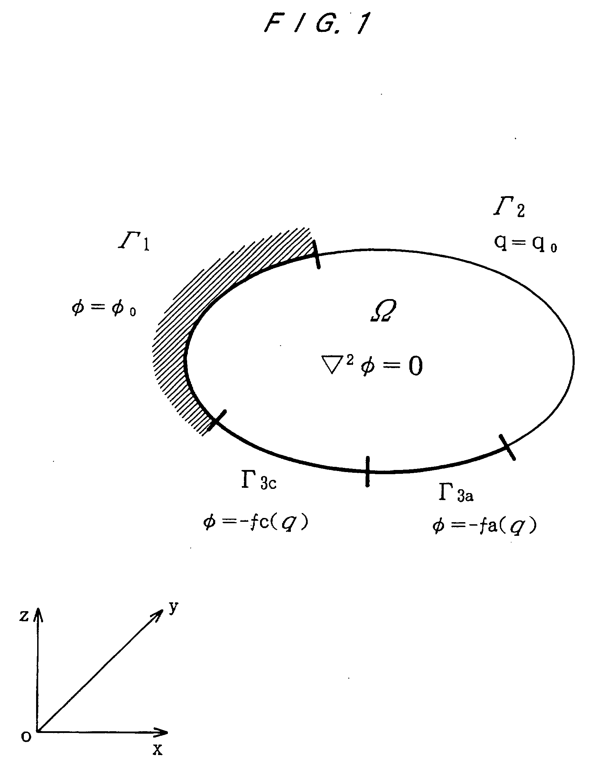

It is assumed that, as shown in FIG. 1 of the accompanying drawings, the electrolyte is surrounded by boundaries $\Gamma_1$, $\Gamma_2$, $\Gamma_{3a}$, and $\Gamma_{3c}$ where $\Gamma_1$ represents a boundary (a boundary with a constant potential) where the value of potential $\phi$ is fixed to $\phi_0$, $\Gamma_2$ represents a boundary (a boundary with a constant current density) where the value of current density q is fixed to $q_0$, and $\Gamma_{3a}$ and $\Gamma_{3c}$ represent the surfaces of the anode and the cathode, respectively.

Boundary conditions at the respective boundaries are given by the following equations:

$$\text{On } \Gamma_1: \Phi = \Phi_0 \tag{4}$$

$$\text{On } \Gamma_2: q \{\equiv K\partial\Phi/\partial n\} = q_0 \tag{5}$$

$$\text{On } \Gamma_{3a}: \Phi = -f_a(q) \tag{6}$$

$$\text{On } \Gamma_{3c}: \Phi = -f_c(q) \tag{7}$$

where $\kappa$ represents the electric conductivity of the electrolyte, $\partial/\partial n$ represents a differential in the direction of an outward normal, and $f_a(q)$ and $f_c(q)$ represent nonlinear functions indicative of polarization characteristics of the anode and the cathode, which can be determined experimentally. When the equation (3) is solved with respect to the equations (4) through (7) representing boundary conditions, potential and current density distributions in the vicinity of the surface can be determined. The potential $\phi$ and an electrode potential E that is to be actually measured are related to each other by $\phi = -E$.

[Solution according to the boundary element method]

Upon ordinary formulation of the boundary element method, a boundary integral equation is derived according to the equation (3):

$$ck\phi = \int_\Gamma \phi^* q \, d\Gamma - \int_\Gamma \phi q^* \, d\Gamma \tag{8}$$

where $\phi^*$ represents the fundamental solution of a three-dimensional Laplace equation, $q^* = \kappa\partial\phi^*/\partial n$, $\Gamma$ represents boundaries ($= \Gamma_1 + \Gamma_2 + \Gamma_{3a} + \Gamma_{3c}$) surrounding the electrolyte, and c is c = 1/2 for smooth boundaries and c = $\omega/2\pi$ at an angular point of angle $\omega$.

In order to numerically solve the boundary integral equation, it is necessary to make it discrete. When the boundaries are divided into many elements and $\phi$, q are approximated by discrete values at respective nodal points and interpolating functions, the following simultaneous system of algebraic equations is derived:

$$[A]\begin{Bmatrix} xj \\ qj \end{Bmatrix} = [B]\begin{Bmatrix} bj \\ f_j(q_j) \end{Bmatrix} \qquad (9)$$

where $b_j$ (j = 1, 2, $\cdots$, p) represents the value of a known component of $\phi$ or q on the boundaries $\Gamma_1 + \Gamma_2$, $x_j$ (j = 1, 2, $\cdots$, p) represents an unknown quantity corresponding to $b_j$, $f_j(q_j)$ (j = 1, 2, $\cdots$, s) represents a nonlinear function indicative of polarization characteristics, p and s represent the numbers of elements on the boundaries $\Gamma_1 + \Gamma_2$ and $\Gamma_{3a} + \Gamma_{3c}$, and [A] and [B] represent matrixes determined by the geometrical shape of the boundary $\Gamma$. Since this equation is nonlinear, repeated calculations are required to solve the equation. The inventor employs the Newton-Raphson method.

[Process of analyzing axially symmetric region]

Many actual devices such as some pipe or pump components include axially symmetric regions, and it is desired to analyze these axially symmetric regions more simply. The following two methods are chiefly considered as a process of solving an axially symmetric problem. Namely, (i) a method of using a fundamental solution for an axially symmetric problem, and (ii) a method of using an ordinary fundamental solution for a three-dimensional problem and reducing the number of elements in view of axial symmetry when making boundaries discrete. Using a fundamental solution which meets an axially symmetric condition poses a problem in that integral calculations become more complex than using an ordinary fundamental solution. The present program employs a method of reducing the number of elements in view of axial symmetry when making boundaries discrete. This method will be described below.

In an ordinary three-dimensional analysis, it is necessary to divide all boundaries into elements in order to make the boundary integral equation (8) discrete. However, since $\phi$ and q have the same value in the circumferential direction due to axial symmetry, the equation (8) can be modified as follows:

$$kc\phi = \int_{\Gamma_{ID}}\left( q \int_0^{2\pi} r\phi^* d\theta - \phi \int_0^{2\pi} rq^* d\theta \right) d\Gamma \qquad (10)$$

where $\Gamma_{ID}$ represents a range on a one-dimensional line. From the equation (10), a simultaneous system of algebraic equations can be obtained simply by making $\Gamma_{ID}$ discrete. Therefore, based on axial symmetry, the number of unknowns can greatly be reduced, and the accuracy can be increased.

[Region dividing method]

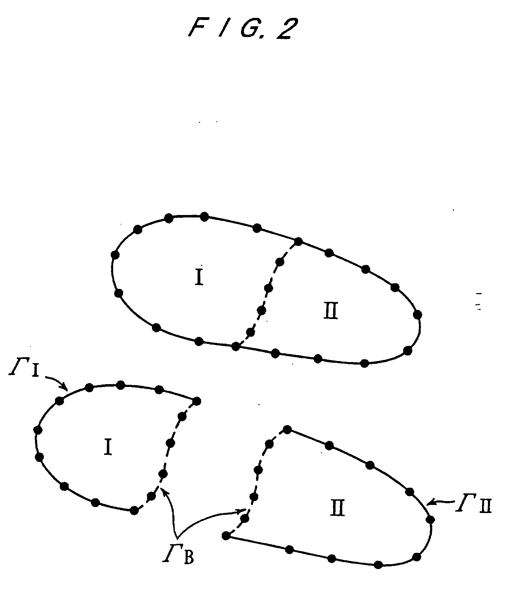

For the sake of brevity, a region made up of two parts is considered as shown in FIG. 2 of the accompanying drawings. If an internal boundary plane is represented by $\Gamma_B$, then since the equation (9) is satisfied in each of the regions, the following equation is satisfied:

Region I

$$[A^I G^{IB}]\begin{Bmatrix} X^I \\ q^{IB} \end{Bmatrix} = [B^I H^{IB}]\begin{Bmatrix} b^I \\ \phi^{IB} \end{Bmatrix} \qquad (11)$$

Region II

$$[A^{II} G^{IIB}]\begin{Bmatrix} X^{II} \\ q^{IIB} \end{Bmatrix} = [B^{II} H^{IIB}]\begin{Bmatrix} b^{II} \\ \phi^{IIB} \end{Bmatrix} \qquad (12)$$

where the suffixes I, II represent quantities relative to the respective regions I, II, and the suffix B represents a quantity relative to the internal boundary plane $\Gamma_B$. $\{X^M\}$ (M = I, II) represents a vector having as its elements quantities relative to boundaries other than the internal boundary plane $\Gamma_B$ among $x_i$ and $q_i$, $\{b^M\}$ (M = I, II) represents a vector having as its elements known quantities corresponding to $X^M$ (or a function representing a polarization curve).

Since a potential and a current density are continuous in the internal boundary, the following equations are satisfied:

$$\phi^{IB} = \phi^{IIB} \qquad (13)$$

$$q^{IB} = - q^{IIB} \qquad (14)$$

In the equations (11) and (12), if $[H^{MB}]\{\phi^{MB}\}$ (M = I, II) on the right side is transferred to the left side, and the equations (13) and (14) are substituted, then the following equations are obtained:

$$[A^{I} G^{IB} - H^{IB}]\begin{Bmatrix} X^{I} \\ q^{IB} \\ \phi^{IB} \end{Bmatrix} = [B^{I}]\{b^{I}\} \qquad (15)$$

$$[-G^{IIB} - H^{IIB} A^{II}]\begin{Bmatrix} q^{IB} \\ \phi^{IB} \\ X^{II} \end{Bmatrix} = [B^{II}]\{b^{II}\} \qquad (16)$$

These equations can be combined into the following equation:

$$\begin{bmatrix} A^{I} G^{IB} - H^{IB} & 0 \\ 0 & -G^{IIB} - H^{IIB} A^{II} \end{bmatrix}\begin{Bmatrix} X^{I} \\ q^{IB} \\ \phi^{IB} \\ X^{II} \end{Bmatrix} = \begin{bmatrix} B^{I} & 0 \\ 0 & B^{II} \end{bmatrix}\begin{Bmatrix} b^{I} \\ b^{II} \end{Bmatrix} \qquad (17)$$

This equation is a nonlinear equation as with the equation (9).

As described above, the inventor has developed six programs for analyzing an open region (a region surrounded by an electrolyte that extends infinitely far away, as the outer surface of a ship) and a closed region (a region surrounding an electrolyte, as the inner surface of a pump) with respect to each of two-dimensional, three-dimensional, and axially symmetric objects, and solved practical corrosion and corrosion prevention problems.

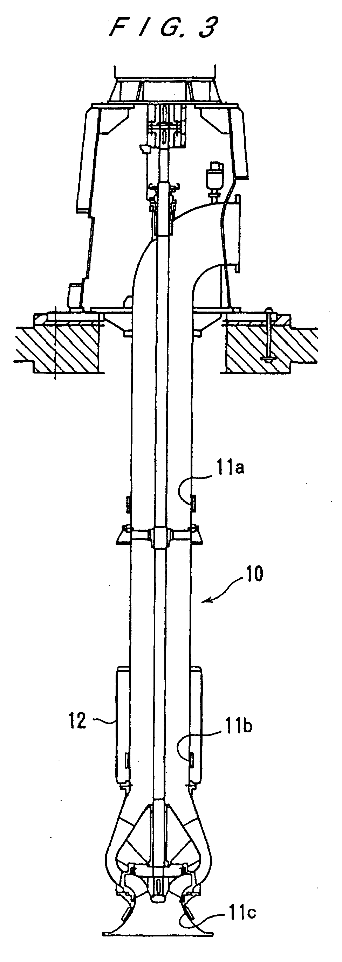

In actual system, some of six regions that can be modeled as two-dimensional objects (open and closed regions), three-dimensional objects (open and closed regions), and axially symmetric objects (open and closed regions) are present continuously. FIG. 3 of the accompanying drawings show a specific example. FIG. 3 shows a seawater pump of stainless steel having Zn sacrificial anodes disposed in three locations on the inner surface thereof and four Zn sacrificial anodes in the form of prisms spaced at equal intervals on the outer surface thereof. The inner and outer surfaces of the pump are connected to each other via seawater, so that the inner surface should electrochemically affect the outer surface and the outer surface should electrochemically affect the inner surface.

However, the seawater surrounding the outer surface of the pump occupies a wide region, and boundaries for dividing the outer surface are too large to handle it as a closed region. It is practically impossible to model and simultaneously analyze the outer surface as a three-dimensional closed region as with the inner surface. Therefore, the inner surface of the pump is analyzed as a three-dimensional closed region, and the outer surface of the pump as an open region. The inner surface of a guide casing is divided into seven flow paths by seven helical guide vanes. Since these flow paths are symmetrical, one of them is taken and divided into three-dimensional elements. The prismatic anodes on the outer surface of the pump are handled as axially symmetric on the assumption that strip-shaped anodes of the same area are mounted on the outer surface of the pump, and handled as open-region axially symmetric models.

Actually, since the inner and outer surfaces of the pump electrochemically affect each other, they need to be analyzed taking that consideration into account. However, because analyzing programs for handling the respective regions are different from each other (the inner surface of the pump: a three-dimensional closed-region program, the outer surface of the pump: an axially symmetric open-region program), it has heretofore been impossible to perform an analysis taking the effect of the regions on each other into account. While the inventor has developed the region dividing method, as described above, the developed method can only analyze regions modeled in the same manner.

**Disclosure of Invention**

The present invention has been made in view of the above drawbacks. It is an object of the present invention to provide a method of analyzing corrosion and corrosion prevention in a system where two or more same or different regions of six regions that are modeled as two-dimensional objects (open and closed regions), three-dimensional objects (open and closed regions), and axially symmetric objects (open and closed regions) are present continuously, the method being capable of analyzing the two or more different regions that are present continuously.

According to an invention defined in claim 1, there is provided a method of analyzing corrosion and corrosion prevention in a system where two or more same or different regions of six regions that are modeled as two-dimensional objects (open and closed regions), three-dimensional objects (open and closed regions), and axially symmetric objects (open and closed regions) are present continuously, characterized by the steps of dividing the system into regions and dividing each of the regions into elements depending on respective models (two-dimensional, three-dimensional, and axially symmetric) thereof, and using one of the regions as an attentional region and another as a non-attentional region, and giving varying values of a current density or a potential to the elements where current densities and potentials on the elements which are positionally the same as each other on a division plane disposed between and shared by two regions are equivalent to each other, the relationship between the current densities and potentials on the elements being unknown, solving a discrete boundary integral equation corresponding to the non-attentional region for the given values of the current density or the potential thereby to express the unknown relationship between the current densities and potentials on the division plane with the known relationship between current densities and potentials on elements in the non-attentional region other than the division plane, performing a boundary element analysis on the attentional region using the determined relationship between the current densities and potentials on the division plane as a boundary condition on the division plane thereby to determine potential and current density distributions in the attentional region in its entirety, and performing a boundary element analysis on the non-attentional region again using the determined potentials or current densities on the division plane thereby to analyze the regions in a related manner.

According to an invention defined in claim 2, there is provided a method of analyzing corrosion and corrosion prevention in a system where two or more non-attentional regions are present continuously with respect to the one attentional region, characterized by the steps of determining the relationship between current densities and potentials with respect to both division planes in the method according to claim 1, analyzing the attentional region using the determined relationship as a boundary condition to determine potential and current density distributions in the attentional region in its entirety, and performing a boundary element analysis on the non-attentional region again using the determined potentials or current densities on the division planes thereby to analyze the regions in a related manner.

According to the present invention, the discrete boundary integral equation corresponding to the non-attentional region is solved to express the unknown relationship between the current densities and potentials on the division plane with the known relationship between current densities and potentials on elements in the non-attentional region other than the division plane. In this manner, the relationship between the current densities and potentials on the division plane in the non-attentional region can be obtained, and the attentional region can be analyzed from the obtained relationship on the division plane taking the non-attentional region into account. Therefore, the different regions can be continuously analyzed in a relatively short time.

The method according to the present invention is also applicable to a system where two or more non-attentional regions are present continuously with respect to one attentional region.

**Brief Description of Drawings**

FIG. 1 is a diagram illustrative of boundary conditions for determining a potential or current density distribution;
FIG. 2 is a diagram illustrative of the division of regions;
FIG. 3 is a view showing a structure of a seawater pump as an example of an object to be analyzed;
FIG. 4 is a diagram showing two different regions that are present continuously;
FIGS. 5A and 5B are views showing the division of regions of the seawater pump; and
FIGS. 6A through 6C are views showing the results of an analysis of the seawater pump, FIG. 6A showing the shape of the pump (segment positions), FIG. 6B showing a potential distribution on the inner surface of the pump, and FIG. 6C showing a potential distribution on the outer surface of the pump.

**Best Mode for Carrying Out the Invention**

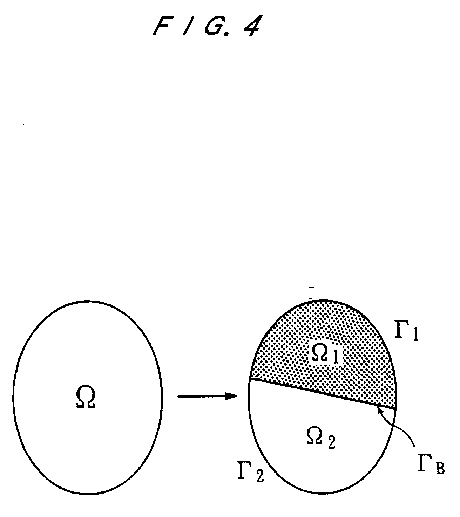

FIG. 4 shows a region $\Omega$ that is divided into two different regions $\Omega_1, \Omega_2$ that are present continuously. Boundary elements $\Gamma_1, \Gamma_2$ of those regions $\Omega_1, \Omega_2$ are partly known. $\Gamma_B$ represents a boundary element on the dividing plane, which has a potential and a current density that are common as viewed from the region $\Omega_1$ or the region $\Omega_2$.
When an ordinary boundary element method is applied to an attentional region, the following discrete equation is obtained:

$$[H_2]\begin{Bmatrix} \phi^2 \\ \phi_I^2 \end{Bmatrix} = [G_2]\begin{Bmatrix} q^2 \\ q_I^2 \end{Bmatrix} \qquad (18)$$

where $\phi^2$ and $q^2$ represent a potential and a current density on the boundary $\Gamma_2$, $\phi_B^2$ and $q_B^2$ represent a potential and a current density on the boundary $\Gamma_B$ as seen from the region $\Omega_2$, and $[H_2]$ and $[G_2]$ represent coefficient matrixes obtained by applying the ordinary boundary element method. If the entire boundary surrounding the region $\Omega_2$ is made up of n elements, then it is assumed that the n elements include m elements on the boundary $\Gamma_2$ and one element on the boundary $\Gamma_B$.
When the unknown boundary nodal point quantity is transferred to the left side and the known boundary nodal point quantity is transferred to the right side in the equation (18) to change the equation (18) to a form Ax = b and the boundary condition on the boundary $\Gamma_2$ is substituted, the following equation is obtained:

x represents a vector composed of an unknown potential or current density, b represents a constant-term vector after the known boundary condition is substituted,
and A represents a coefficient matrix determined by H, G matrixes and the gradient of the polarization curve.

$$\begin{bmatrix} a_{11} & \cdots & \cdots & a_{1n+l} \\ \vdots & & & \vdots \\ a_{t1} & \cdots & \cdots & a_{nn+1} \end{bmatrix}\begin{Bmatrix} \phi_?^2 \\ q_?^2 \\ \phi_I^2 \\ q_I \end{Bmatrix} = \begin{Bmatrix} b_1 \\ \vdots \\ b_n \end{Bmatrix} \qquad (19)$$

where $\phi_?^2$, $q_?^2$ represent an unknown potential and current density on the boundary $\Gamma_2$, x represents an m + 21 row vector, vector b represents an n row vector, and matrix A represents a matrix having a size of nx (m + 21).
The matrix A is divided as follows:

$$A = \begin{bmatrix} a_{11} & \cdots & \cdots & a_{1n+l} \\ \vdots & & & \vdots \\ a_{11} & \cdots & \cdots & a_{nn+l} \end{bmatrix}$$

$$\begin{bmatrix} A_{22} & A_{2l} \\ A_{l2} & A_{ll} \end{bmatrix} \begin{Bmatrix} \phi_?^2 \\ q_?^2 \\ \phi_1^2 \\ q_1 \end{Bmatrix} = \begin{Bmatrix} B_2 \\ \overline{B_1} \end{Bmatrix} \tag{20}$$

When $\phi^2_?$ and $q^2_?$ are erased from the equation (20), the relationship between $\phi^2_B$ and $q^2_B$ according to the following equation is obtained:

$$\left\{ [A_{ll}] - [A_{l2}][A_{22}^{-1}][A_{2l}] \right\} \begin{Bmatrix} \phi_l^2 \\ q_l^2 \end{Bmatrix} = \{B_l\} - [A_{l2}][A_{22}^{-1}]\{B_2\} \tag{21}$$

The equation (21) is an equation representing the relationship between the boundary nodal point quantities $\phi^2_B$ and $q^2_B$ on the boundary $\Gamma_B$. This equation represents the relationship between $\phi^2_B$ and $q^2_B$ taking into account the effect of the non-attentional region $\Omega_2$, and is considered as a boundary condition equivalent to the effect of the non-attentional region. If this boundary condition is given as a boundary condition for $\Gamma_B$, then it is possible to analyze an attentional region taking into account the effect of the non-attentional region. Specifically, the attentional region is analyzed using, as the boundary condition, a potential or current density on $\Gamma_B$, which has been obtained by analyzing the non-attentional region. When the non-attentional region is further analyzed based on the potential or current density on the obtained division plane, the analysis of all the regions is completed.

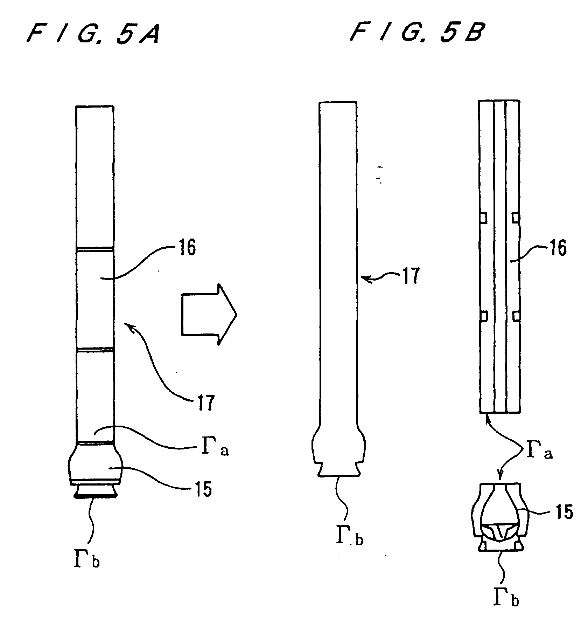

The object to be analyzed comprises a vertical-shaft pump having a diameter of 200 mm and a length of 6000 mm, as shown in FIG. 3. As shown in FIGS. 5A and 5B, the pump is divided into inner pump portions 15, 16 and an outer pump portion 17. The inner surface of the pump is divided into a guide casing 15 of complex three-dimensional shape comprising a combination of complex members and having a helical flow path, and a column pipe 16 that can be modeled axially symmetrically. The three regions thus divided include a pump outer surface, a guide casing inner surface, and a column pipe inner surface which are handled as an axially symmetric open region, a three-dimensional closed region, and an axially symmetric closed region, respectively. The guide casing inner surface is divided into seven flow paths by seven helical guide vanes. Since these flow paths are symmetrical, one of them is taken and divided into three-dimensional elements.

In order to determine the relationship between a potential Vs and a current density q on boundary surfaces $\Gamma_a$, $\Gamma_b$ between the pump outer surface and the column pipe inner surface, and the guide casing, the pump outer surface and the column pipe inner surface are handled as non-attentional regions, and subjected to a boundary element analysis. The former is subjected to an axially symmetric open-region analysis, and the latter to an axially symmetric closed-region analysis.

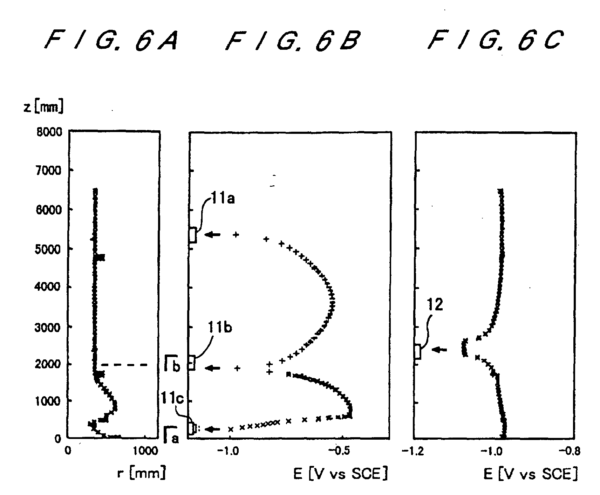

Using the obtained relationship between the potential and the current density as a boundary condition, the guide casing. (attentional region) is subjected to a three-dimensional closed-region analysis. Using current densities on the boundary surfaces $\Gamma_a$, $\Gamma_b$ obtained from this analysis as boundary conditions, the pump outer surface and the column pipe inner surface are analyzed again, whereupon all analyses are completed. FIGS. 6A through 6C show the results of the analyses as representing potential distributions on the pump inner and outer surfaces.

FIG. 6A shows the shape of the pump (segment positions) to be analyzed. In FIG. 6A, the horizontal axis represents the radial position, and the vertical axis the axial position. FIG. 6B shows a potential distribution on the pump inner surface, and FIG. 6C shows a potential distribution on the pump outer surface. At the positions of sacrificial anodes 11a, 11b, 11c shown in FIG. 3, the potential on the pump inner surface is highly negative, and the potential is of about - 0.4 [V] in portions other than the sacrificial anodes. It can thus be seen that while the potential would usually be of about 0 [V] if no sacrificial anodes were used on a stainless pump in seawater, the sacrificial anodes are highly effective to prevent corrosion. This holds true for the pump outer surface. A region between $\Gamma_a$, $\Gamma_b$ is an attentional region (guide casing), and other regions are non-attentional regions. On these division planes $\Gamma_a$, $\Gamma_b$, the potential distribution is continuous. It can be seen from the continuous potential distribution that continuous analytic results between different regions can be obtained by the related analysis between the different regions.

The above embodiment represents an example of the present invention, and can be modified in various ways without departing from the scope of the invention.

Heretofore, complex fields where two or more of different six regions that are modeled as two-dimensional objects (open and closed regions), three-dimensional objects (open and closed regions), and axially symmetric objects (open and closed regions) are present continuously have to be analyzed separately. In the method according to the present invention, it is possible to analyze those fields in a related fashion.

For example, heretofore, the inner and outer surfaces of a vertical-shaft pump have been analyzed separately though they electrochemically affect each other, and cannot accurately be analyzed for corrosion and corrosion prevention. In the method according to the present invention, however, it is possible to analyze the pump inner and outer surfaces in a related manner in a relatively short time. While the entire pump inner surface has heretofore been analyzed using a three-dimensional closed-region model, the method according to the present invention makes it possible to analyze the column pipe inner surface of simple shape using an axially symmetric model, allowing the surface to be divided into elements with ease.

If a three-dimensional region and an axially symmetric region are present continuously, then it has not been possible to accurately determine a region that can be modeled axially symmetrically. According to the present invention, however, the regions can clearly be distinguished from each other as described above, and a potential distribution and a current density distribution can easily be analyzed at the boundary region, so that effective corrosion prevention measures can be taken.

**Industrial Applicability**

The present invention relates to a method of analyzing corrosion and corrosion prevention with a computer, and can be used to predict corrosion and corrosion prevention for various devices such as pumps installed in seawater, water, and soil. The method can be used for a computer simulation of a system, such as a plating facility, a battery cell, or an electrolysis tank, where an anode and a cathode are macroscopically present with an electrolyte interposed therebetween to form a potential field, other than the problems of metal corrosion and corrosion prevention.

**Claims**

1. A method of analyzing corrosion and corrosion prevention in a system where two or more same or different regions of six regions that are modeled as two-dimensional objects (open and closed regions), three-dimensional objects (open and closed regions), and axially symmetric objects (open and closed regions) are present continuously, characterized by:

   dividing the system into regions and dividing each of the regions into elements depending on respective models (two-dimensional, three-dimensional, and axially symmetric) thereof, and using one of the regions as an attentional region and another as a non-attentional region;
   giving varying values of a current density or a potential to the elements where current densities and potentials on the elements which are positionally the same as each other on a division plane disposed between and shared by two regions are equivalent to each other, the relationship between the current densities and potentials on the elements being unknown;
   solving a discrete boundary integral equation corresponding to the non-attentional region for the given values of the current density or the potential thereby to express the unknown relationship between the current densities and potentials on the division plane with the known relationship between current densities and potentials on elements in the non-attentional region other than the division plane;
   performing a boundary element analysis on the attentional region using the determined relationship between the current densities and potentials on the division plane as a boundary condition on the division plane thereby to determine potential and current density distributions in the attentional region in its entirety; and
   performing a boundary element analysis on the non-attentional region again using the determined potentials or current densities on the division plane thereby to analyze the regions in a related manner.

2. A method of analyzing corrosion and corrosion prevention in a system, where two or more non-attentional regions are present continuously with respect to one said attentional region, characterized by:

determining the relationship between current densities and potentials with respect to both division planes in the method according to claim 1,

analyzing the attentional region using the determined relationship as a boundary condition to determine potential and current density distributions in the attentional region in its entirety, and

performing a boundary element analysis on the non-attentional region again using the determined potentials or current densities on the division planes thereby to analyze the regions in a related manner.

3. A method of analyzing corrosion and corrosion prevention of a pump according to claim 2, characterized in that said attentional region comprises a closed region of three-dimensional shape in a guide casing of a pump, and the non-attentional regions comprise an axially symmetric closed region of a column pipe on an inner surface of the pump which is contiguous to said guide casing, and an axially symmetric open region of an outer surface of the pump.

4. A method of analyzing corrosion and corrosion prevention of a pump according to claim 3, characterized in that anodes are disposed in some or all of the regions of the pumps and a corrosion prevention effect of the anodes is evaluated.

# F I G. 1

$\Gamma_2$

$q = q_0$

$\Gamma_1$

$\phi = \phi_0$

$\Omega$

$\nabla^2 \phi = 0$

$\Gamma_{3c}$

$\phi = -fc(q)$

$\Gamma_{3a}$

$\phi = -fa(q)$

z

y

O

x

F I G. 2

## F I G. 3

11a

10

12

11b

11c

*F I G. 4*

*F I G. 5A*

*F I G. 5B*

16

17

Γa

15

Γb

16

17

Γa

15

Γb

# F I G. 6A   F I G. 6B   F I G. 6C

## INTERNATIONAL SEARCH REPORT

| | International application No. |
|---|---|
| | PCT/JP99/05110 |

A. CLASSIFICATION OF SUBJECT MATTER
    Int.Cl$^6$    G01N27/26

According to International Patent Classification (IPC) or to both national classification and IPC

B. FIELDS SEARCHED

Minimum documentation searched (classification system followed by classification symbols)
    Int.Cl$^6$    G01N27/26

Documentation searched other than minimum documentation to the extent that such documents are included in the fields searched
    Jitsuyo Shinan Koho          1926-1996    Toroku Jitsuyo Shinan Koho  1994-1999
    Kokai Jitsuyo Shinan Koho  1971-1999    Jitsuyo Shinan Toroku Koho  1996-1999

Electronic data base consulted during the international search (name of data base and, where practicable, search terms used)
    JICST

C. DOCUMENTS CONSIDERED TO BE RELEVANT

| Category* | Citation of document, with indication, where appropriate, of the relevant passages | Relevant to claim No. |
|---|---|---|
| A | Materials and Environment, No. 46(6), pages 378-383, Shadan Hojin Fushoku Boshoku Kyokai, 15 June, 1997 (15.06.97) | 1-4 |
| A | Surface Technology, No. 48(9), pages 900-905, Shadan Hojin Hyomen Gijutsu Kyokai, 1997 | 1-4 |
| A | Ebara Jiho, No. 171, pages 3-8, April, 1996 | 1-4 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 December, 1999 (09.12.99) | 21 December, 1999 (21.12.99) |

| Name and mailing address of the ISA/ | Authorized officer |
|---|---|
| Japanese Patent Office | |
| Facsimile No. | Telephone No. |

Form PCT/ISA/210 (second sheet) (July 1992)